**Europäisches Patentamt**

**European Patent Office**

**Office européen des brevets**

(11) Numéro de publication: **0 022 736**
**B1**

(12) **FASCICULE DE BREVET EUROPEEN**

(45) Date de publication du fascicule du brevet: **15.09.82**

(51) Int. Cl.³: **B 23 K 9/235, B 23 K 35/36**

(21) Numéro de dépôt: **80420087.1**

(22) Date de dépôt: **08.07.80**

(54) **Procédé pour le soudage de l'acier à l'arc électrique sous gaz protecteur et son utilisation.**

(30) Priorité: **11.07.79 FR 7918507**

(43) Date de publication de la demande:
**21.01.81 Bulletin 81/3**

(45) Mention de la délivrance du brevet:
**15.09.82 Bulletin 82/37**

(84) Etats contractants désignés:
**BE CH DE GB IT LI NL SE**

(56) Documents cités:
**FR - A - 601 532**
**FR - A - 2 383 748**
**GB - A - 1 180 964**
**US - A - 1 905 081**
**US - A - 2 210 777**

**MACHINE DESIGN, vol. 47, no. 7, 20 mars 1975**
**CLEVELAND OHIO (US) W. EARL HANLEY:**
**"Shot blasting Your way to better finishes",**
**pages 74—78.**

(73) Titulaire: **UGINE ACIERS**
**10, rue du Général Foy**
**F-75008 Paris (FR)**

(72) Inventeur: **Barbazanges, Yves**
**"Le Mont Bisanne"**
**F-73400 Ugine (FR)**
Inventeur: **Maitrepierre, Philippe**
**"Le Paradis" Route de Pallud**
**F-73200 Albertville (FR)**
Inventeur: **Mathern, Guy**
**31, rue Félix Chautemps "Le Bois Fleuri"**
**F-73200 Albertville (FR)**

(74) Mandataire: **Givord, Jean-Pierre et al,**
**PECHINEY UGINE KUHLMANN 28, rue de Bonnel**
**F-69433 Lyon Cedex 3 (FR)**

# 0 022 736

Procédé pour le soudage de l'acier à l'arc électrique sous gaz protecteur et son utilisation

Le procédé qui fait l'objet de l'invention concerne le soudage des tôles ou bandes en acier à l'arc électrique sous gaz protecteur.

L'une des méthodes les plus pratiquées pour le soudage des tôles ou bandes est celle qui consiste à souder à l'arc les métaux sous atmosphère neutre. De la façon la plus générale, elle consiste à faire jaillir un arc entre une électrode et le métal à souder. Un courant de gaz protecteur, le plus souvent de l'argon, de l'hélium ou un mélange de ces deux gaz, entoure la colonne d'arc et protège de l'oxydation à la fois l'électrode et la zone de soudage. L'électrode est en liaison avec un des pôles de la source de courant électrique qui est du courant continu ou alternatif. L'autre pôle de la source de courant est relié de façon convenable au métal à souder.

Ce procédé a pris un développement important, en particulier pour la fabrication de tubes de relativement faible épaisseur en acier inoxydable à partir d'une bande roulée puis soudée bord à bord. Pour qu'une telle fabrication soit capable de concurrencer, sur le plan technique, les tubes sans soudure, il est très important que les cordons de soudure réalisés soient d'une régularité aussi parfaite que possible en ce qui concerne leur largeur, leur profondeur de pénétration et leur absence de porosité. Il faut aussi que les légers sillons ou canivaux qui se forment en général de part et d'autre du cordon de soudure et qui délimitent les bords de la zone qui a fondu au passage de l'arc, soient aussi peu accusés que possible pour ne pas affaiblir le tube. Enfin, pour qu'une telle fabrication ait un intérêt économique suffisant, il faut pouvoir atteindre une vitesse de soudage aussi élevée que possible.

Il est connu qu'un certain nombre de facteurs métallurgiques ont une influence sur la vitesse de soudage et les caractéristiques des cordons de soudure obtenus.

C'est ainsi que, dans le cas des aciers inoxydables, le type d'acier auquel on a affaire, austénitique ou ferritique, joue un rôle important. De même, parmi les aciers d'un même type on peut observer des variations importantes d'aptitude au soudage en fonction des teneurs en certaines impuretés telles que, par exemple, l'oxygène ou le soufre, ou encore en fonction d'éléments d'addition à faibles niveaux de teneur tels que l'aluminium ou le titane.

Dans la pratique, on caractérise l'aptitude au soudage d'une qualité déterminée d'acier, par des essais de soudage effectués sur des bandes d'une épaisseur bien déterminée, à un ou plusieurs niveaux d'intensité d'arc en faisant varier la vitesse de soudage.

Dans le cas du soudage sans métal d'apport, par la méthode TIG, dans laquelle on utilise une électrode non consommable à base de tungstène sous atmosphère le plus souvent d'argon, il est commode d'effectuer les essais non pas par soudage bord à bord de tôles ou de bandes, mais simplement par fusion d'un cordon en pleine tôle ou bande, au moyen d'un arc jaillissant entre l'électrode et la surface de la tôle ou bande, dans des conditions identiques aux conditions de soudage qu'on se propose de mettre en oeuvre. En réalisant un déplacement relatif de l'arc le long de la tôle ou bande à vitesse déterminée, on obtient un cordon de métal fondu puis solidifié, qui a pratiquement les mêmes caractéristiques que celui qui aurait été réalisé par déplacement relatif de l'arc, suivant la ligne de contact des deux bords adjacents d'une même bande roulée, ou de deux tôles ou bandes placées côte à côte.

L'observation de l'évolution des caractéristiques des cordons ainsi réalisés en fonction des conditions opératoires, permet de déterminer, pour la qualité d'acier étudiée, les plages de réglage à l'intérieur desquelles il faut se placer, si on veut obtenir, dans des opérations de soudage bord à bord, des cordons de soudure de qualité satisfaisante.

Les essais montrent que, pour une tôle ou bande d'acier de caractéristique physico-chimiques déterminées, ayant un état de surface bien défini, si on réalise des cordons en réglant la puissance de l'arc de façon à utiliser une énergie électrique constante par mètre linéaire de cordon, on constate une évolution des caractéristiques de ce cordon en fonction de sa vitesse de formation. En effet, en accroissant progressivement cette vitesse, il apparaît de part et d'autre du cordon de métal qui a été fondu par l'arc puis solidifié, de légers sillons ou canivaux dont la profondeur augmente avec la vitesse.

La profondeur de ces canivaux, qui peut atteindre plusieurs dixièmes de millimètres, affaiblit très sensiblement les caractéristiques mécaniques de la tôle ou bande en diminuant localement son épaisseur.

Si on accroît encore davantage la vitesse de soudage, on peut atteindre une valeur pour laquelle la surface du cordon devient irrégulière. On constate, en particulier, que la largeur de la zone qui a été fondue par l'arc, au lieu de demeurer sensiblement constante, devient variable, les bords de cette zone n'étant plus parallèles au déplacement de l'arc, mais présentant un tracé sinueux. La qualité du cordon de soudure est alors gravement altérée.

Le nouveau procédé qui fait l'objet de l'invention permet de souder à l'arc sous gaz protecteur les tôles ou bandes à vitesse élevée, en évitant la formation de canivaux profonds de part et d'autre du cordon de soudure, celui-ci présentant, par ailleurs, une largeur sensiblement constante, et des bords sensiblement parallèles à la direction du déplacement de l'électrode. Ce procédé permet aussi, toutes choses égales par ailleurs, une meilleure pénétration des cordons de soudure. Pour toutes ces raisons, ce procédé permet un accroissement de productivité très notable des installations de soudage, en particulier dans le cas de celles qui sont utilisées pour la production de tubes en acier inoxydable.

2

**0 022 736**

Ce procédé consiste, de façon extrêmement simple, à introduire dans la zone de fusion du cordon de soudure des particules de silice. Cette introduction peut être réalisée de différentes façons. L'une des plus efficaces, comme on le verra plus loin, consiste à effectuer, avant soudage, un sablage de la surface à souder au moyen d'un sable à base de silice. On peut utiliser, en particulier, les sables à base de silice qui sont d'emploi courant pour le sablage des métaux. Les équipements habituels de sablage conviennent bien pour cette opération.

La qualité du résultat est fonction du soin apporté. Les essais ont montré, en particulier, que le sablage est d'autant plus efficace qu'il permet l'accrochage d'une certaine quantité de grains de silice à la surface de l'acier dans la zone où sera réalisé le cordon de soudure.

Il est, en effet, nécessaire que les grains de silice ne soient pas tous chassés au passage de l'arc avant fusion de l'acier.

L'opération de sablage doit donc être conduite dans des conditions qui permettent la réalisation de cet accrochage. On pourra, suivant les cas, effectuer une ou plusieurs passes de sablage.

## EXEMPLE

Le procédé suivant l'invention a été mise en oeuvre de façon comparative avec la méthode classique, dans le cas de soudage TIG sans métal d'apport de trois nuances nettement différentes d'acier inoxydable. Ces trois nuances étaient les suivantes:

— nuance A: acier norme AFNOR Z6CN18—09, contenant $Cr = 18\%$; $Ni = 9\%$; $C < 0,07\%$ et ne comportant pas d'addition de titane

— nuance B: acier norme AFNOR Z6CNT18—11, contenant $Cr = 18\%$; $Ni = 11\%$; $C < 0,08\%$ avec addition de titane $Ti > 5 \times C$.

— nuance C: acier norme AFNOR Z8C17, contenant $Cr = 17\%$; $C = 0,07\%$.

On a utilisé des bandes de ces trois nuances laminées à froid à épaisseur de 0,5 mm, et ayant subi un recuit brillant puis un décapage en bain nitrofluorhydrique. Dans chacune des trois nuances, une partie des bandes a été conservée à l'état décapé tandis que le reste a été sablé.

La buse de sablage était alimentée en air comprimé à une pression d'environ 4 bars. Cet air était soigneusement débarrassé de toutes traces d'eau et d'huile par une filtration convenable. On utilisait un sable de silice sec passant au tamis 50 mesh.

Les essais de soudage ont été effectués au moyen d'une soudeuse automatique stabilisée qui délivre des courants d'arc continu dont l'intensité est réglable avec précision dans un large domaine. Le chalumeau était muni d'une électrode de tungstène de 3 mm de diamètre reliée au pôle négatif de la soudeuse et la distance interpolaire était de 1, 5 mm. On utilisait comme gaz protecteur autour de l'arc, de l'argon, avec un débit d'environ 5 l/mn.

Une première série d'essais a été faite en réglant l'intensité d'arc à 200 A et en ajustant la vitesse de déplacement relatif de l'arc à 5,6 m/mm. On a mesuré pour chaque cordon de soudure réalisé, la profondeur moyenne des caniveaux ou sillons formés de part et d'autre du cordon.

Le tableau I ci-dessous donne les résultats obtenus:

## TABLEAU I

| NUANCE D'ACIER | PROFONDEUR MOYENNE DES CANIVEAUX FORMES EN $\mu$m (microns) | |
| --- | --- | --- |
| | bande décapée | bande décapée puis sablée suivant l'invention |
| A | 77 | 40 |
| B | 119 | 27 |
| C | 63 | 37 |

Ces résultats montrent que le procédé suivant l'invention permet dans tous les cas de réduire de façon très sensible la profondeur des caniveaux formés de part et d'autre du cordon de soudure, pour des conditions opératoires par ailleurs identiques.

On voit que cette réduction n'est pas constante d'une nuance d'acier à l'autre, mais qu'elle est cependant très sensible dans tous les cas.

Un essai a été fait également sur des bandes d'acier doux norme AFNOR C10 de 1 mm d'épaisseur à

3

## 0 022 736

l'état recuit, qui avaient été au préalable soit simplement décapées, soit décapées puis sablées par la méthode qui vient d'être décrite. On a réalisé sur ces bandes des cordons avec un arc de 200 A et une vitesse de déplacement relatif de cet arc de 1,8 m/mm. La mesure de la profondeur moyenne des caniveaux, formés de part et d'autre du cordon de soudure, a montré que cette prodondeur était de 188 μm dans le cas de la bande seulement décapée, et de seulement 108 μm dans le cas de la bande décapée puis sablée suivant l'invention.

Une deuxième série a été faite afin d'apprécier l'influence du procédé suivant l'invention sur le degré de pénétration des cordons de soudure. Dans ce but, on a mesuré la largeur de la zone fondue sur des bandes, sur lesquelles des cordons avaient été réalisés en pleine bande, dans des conditions analogues à celles de la première série d'essais. Cette mesure a été faite au dos de la bande, c'est-à-dire sur la face opposée à celle sur laquelle frappe l'arc.

Cette largeur a été mesurée pour trois niveaux d'intensité d'arc différents: 100, 200 et 300 A réalisés en maintenant une même énergie de soudage au mètre linéaire de cordon de 22 000 j/m.

Le tableau ci-dessous permet de comparer les largeurs de zone fondue dans le cas des bandes simplement décapées et dans celui des bandes qui ont ensuite été sablées avant soudage suivant l'invention:

TABLEAU II

| NUANCE D'ACIER INOXYDABLE | Largeur moyenne "L" en mm du cordon de soudure mesurée sur la face opposée à celle en contact avec l'arc | | | | | |
|---|---|---|---|---|---|---|
| | 100 A | | 200 A | | 300 A | |
| | Bande décapée | Bande sablée suivant l'invention | Bande décapée | Bande sablée suivant l'invention | Bande décapée | Bande sablée suivant l'invention |
| A | 1,25 | 1,50 | 1,15 | 1,40 | 0,75 | 1,35 |
| B | 1,15 | 1,45 | 0,80 | 1,40 | 0,75 | 1,60 |
| C | 1,20 | 1,65 | 0,95 | 1,60 | 1,00 | 1,50 |

On voit, d'après ces résultats, que la pénétration telle que mesurée par la largeur "L" du cordon de soudure, sur la face opposée à celle qui reçoit l'impact de l'arc, augmente de 20 à 80% suivant les conditions de ces essais et, en moyenne, d'environ 50%. Grâce à cette augmentation de la pénétration, il est possible, pour une même intensité d'arc, d'augmenter, toutes choses égales par ailleurs, la vitesse de soudage dans les cas de tôles sablées. Cet exemple ne représente qu'un mode de mise en oeuvre de l'invention. Le sablage n'est en effet qu'un moyen d'apporter une petite quantité de silice dans la zone de fusion du cordon de soudure. Cet apport doit être réalisé de façon telle que la silice se trouve, au moment du passage de l'arc, en contact direct avec le métal fondu.

On peut envisager en particulier de déposer des grains de silice à la surface de la bande, dans la zone qui subira l'impact de l'arc et de fixer ces grains par collage ou par pression ou par toute autre méthode, de façon à éviter qu'ils soient chassés avant la fusion du métal.

Lorsqu'on fait appel à la méthode de sablage, il est préférable d'éviter la présence d'eau ou d'huile dans l'air comprimé. Dans certains cas, on peut envisager de dégraisser la bande par un solvant après sablage et avant soudage.

Le procédé suivant l'invention trouve de nombreuses applications pour toutes les opérations de soudage de tôles ou bandes en acier inoxydable de relativement faible épaisseur. Une application particulièrement intéressante est celle qui concerne la réalisation des tubes en acier inoxydable roulés et soudés. Il est connu que ce type de tube a pris un développement considérable, en particulier pour la réalisation de générateurs de vapeur ou d'échangeurs de chaleur de tous types. Le procédé suivant l'invention permet d'accroître dans une large mesure la productivité des équipements de soudage utilisés pour la production de tels tubes. D'autres essais de soudage par le procédé suivant l'invention ont été effectués sur des aciers semi-réfractaires tels que l'acier Z6CNS 20—12 (norme AFNOR); ils ont également donné des résultats tout à fait positifs. Par ailleurs, le procédé s'applique aussi à d'autres types d'aciers tels que les aciers doux, comme cela a été montré plus haut.

Bien que les exemples concernent tous l'utilisation du procédé TIG sans métal d'apport, le

4

**0 022 736**

procédé peut s'appliquer aussi à l'utilisation d'un procédé de soudage à l'arc sous atmosphère de gaz inerte dans lequel on utilise un métal d'apport sans enrobage et sans addition de flux.

### Revendications

1. Procédé de soudage de tôles ou bandes d'acier à l'arc sous atmosphère de gaz protecteur par fusion d'un cordon de soudure, caractérisé en ce qu'on introduit dans la zone de fusion du cordon de soudure, des particules de silice en contact direct avec le métal.

2. Procédé suivant revendication 1, caractérisé en ce que l'introduction des particules de silice est effectuée avant soudage.

3. Procédé suivant revendication 2, caractérisé en ce que l'introduction des particules de silice est faite par sablage de la surface à souder.

4. Procédé suivant l'une des revendications 1 à 3, caractérisé en ce que le soudage est effectué au moyen d'une électrode de tungstène.

5. Procédé suivant l'une des revendications 1 à 4, caractérisé en ce que le soudage est effectué au moyen d'une électrode consommable métallique sans enrobage de flux.

6. Application du procédé selon l'une des revendications 1 à 5 à la réalisation de tubes soudés, par fusion d'un cordon en pleine tôle.

7. Application du procédé selon l'une des revendications 1 à 5 à la réalisation de tubes soudés pour générateurs de vapeur ou échangeurs de chaleur.

### Claims

1. A process for arc welding steel strips or sheets in a protective gas atmosphere by fusion of a weld bead characterised in that particles of silica are introduced into the weld bead fusion region, in direct contact with the metal.

2. A process according to claim 1 characterised in that the operation of introducing the particles of silica is effected before welding.

3. A process according to claim 2 characterised in that the operation of introducing the particles of silica is effected by sand blasting the surface to be welded.

4. A process according to one of claims 1 to 3 characterised in that the welding operation is performed by means of a tungsten electrode.

5. A process according to one of claims 1 to 4 characterised in that the welding operation is performed by means of a consumable metal electrode without flux coating.

6. Use of the process according to one of claims 1 to 5 for producing tubes which are welded by fusion of a bead throughout the metal sheet.

7. Use of the process according to one of claims 1 to 5 for producing welded tubes for vapour generators or heat exchangers.

### Patentansprüche

1. Verfahren zur Lichtbogenschweißung von Stahlblechen oder Stahlbändern in einer Schutzgas-Atmosphäre unter Bildung einer geschmolzenen Schweißnaht, dadurch gekennzeichnet, daß man in den Schmelzbereich Kieselsäure- bzw. Siliciumdioxidteilchen in unmittelbarem Kontakt mit dem Metall einführt.

2. Verfahren nach Anspruch 1, dadurch gekennzeichnet, daß man die $SiO_2$-Teilchen vor dem Schweißen (in die Schweißfuge) einführt.

3. Verfahren nach Anspruch 2, dadurch gekennzeichnet, daß man die $SiO_2$-Teilchen mittels Sandstrahlen der Oberfläche im Schweißbereich einbringt.

4. Verfahren nach einem der Ansprüche 1 bis 3, dadurch gekennzeichnet, daß man mit einer Wolfram-Elektrode schweißt.

5. Verfahren nach einem der Ansprüche 1 bis 4, dadurch gekennzeichnet, daß man mit einer selbstverzehrenden Metall-Elektrode ohne Flußmittelmantel schweißt.

6. Anwendung des Verfahrens nach einem der Ansprüche 1 bis 5 zur Herstellung von geschweißten Rohren aus Vollblech mittels Schmelzen einer Schweißraupe.

7. Anwendung des Verfahrens nach einem der Ansprüche 1 bis 5 zur Herstellung von geschweißten Rohren für Dampfkessel oder Wärmeaustauscher.

5